# EUROPÄISCHE PATENTANMELDUNG

(11) **EP 1 734 091 A1**
(43) Veröffentlichungstag der Anmeldung: **20.12.2006**
(21) Anmeldenummer: 06011560.7
(22) Anmeldetag: 03.06.2006
(51) Int. Cl.: C09G 1/00, C09G 1/02

(54) **Bodenpflegemittel**

(30) Priorität: 15.06.2005 DE 102005027603
(71) Anmelder: Clariant Produkte (Deutschland) GmbH, 65929 Frankfurt am Main (DE)
(72) Erfinder: Lukasch, Anton, 86405 Meitingen (DE)
(74) Vertreter: Paczkowski, Marcus

(57) **Zusammenfassung**

Die vorliegende Erfindung betrifft Zubereitungen zum Pflegen und Behandeln von harten Oberflächen, vorzugsweise von Fußböden, die Ester von Polycarbonsäuren mit Monoalkoholen oder von Monocarbonsäuren mit Polyolen enthalten. In besonderen Ausführungen können die erfindungsgemäßen Zubereitungen außerdem noch polymere (Meth)acrylsäure(ester) und oder Styrol-(Meth)acrylsäure(ester)-Copolymere enthalten und zusätzlich ggf. auch noch Polyethylenwachsdispersionen.

## Beschreibung

Die Erfindung betrifft Zubereitungen zum Pflegen harter Oberflächen, insbesondere Bodenpflegemittel enthaltend Ester von Polycarbonsäuren und Monoalkoholen sowie von Monocarbonsäuren und Polyolen.

In Bodenpflegemitteln werden vor allem Polyacrylate und oder Styrol-(Meth)acrylsäure(ester)-Copolymere als Dispersionen sowie Polyurethandispersionen im Gemisch mit Wachsemulsionen eingesetzt, um eine temporäre oder mehr oder weniger permanente Schutzschicht auf dem betreffenden Boden aufzubringen. Diese Schutzschicht verhindert die Schädigung des Bodens und das Eindringen von Schmutz in Folge strichförmiger Verkratzungen durch Schmutzpartikel bzw. Absatzstriche und sorgt gleichzeitig für ein ästhetisches Aussehen des Bodenbelages.

Die Formulierungen von Bodenpflegemittel aus Polymerdispersionen und Wachsemulsionen enthalten üblicherweise Emulgatoren und Weichmacher, die auch Plastifikatoren genannt werden.

Diese Plastifikatoren sollen die minimalen Filmbildetemperaturen (MFT) der Polymerdispersionen so weit herabsetzen, dass die daraus hergestellten Selbstglanzemulsionen nach dem Auftragen bei Raumtemperatur einen geschlossen Film bilden. Art und Menge der Plastifikatoren richten sich nach den verwendeten Polymerdispersionen. Sie müssen so bemessen sein, dass der Schutzfilm beim Begehen nicht verschmutzt, bei erhöhter Temperatur nicht verklebt und bei niedriger Temperatur nicht pudert. Die Plastifizierung kann durch Kombination verschiedener Plastifikatoren geschehen. Dabei werden permanente und temporäre Plastifikatoren verwendet. Permanente Plastifikatoren verbleiben im Schutzfilm, temporäre verdunsten.

Neben diesen Plastifikatoren werden noch Netz- und Verlaufsmittel, wie Fluortenside oder alkalische Lösungen von Netzharzen oder spezielle Acrylatdispersionen verwendet. Während hier die Netzharzlösung bzw. die Acrylatdispersion für einen gleichmäßigen Verlauf des flüssigen Pflegemittels sorgt, bewirken die Fluortenside ein gleichmäßiges Auftrocknen der fertigen Selbstglanzemulsion auf dem Fußboden und verhindern das Ausbilden eines ungleichmäßigen, fleckigen Pflegefilmes.

An permanenten Plastifikatoren stehen zur Verfügung Dibutylphthalat, ε-Caprolactam und Tributoxyethylphosphat (TBEP). Temporäre Plastifikatoren sind Glykole, wie Ethyldiglykol, Methyldiglykol, aber auch (N-Methyl)-2-pyrrolidon. N-Methyl-2-Pyrrolidon steht neuerdings im Verdacht, fruchtschädigend zu sein, Phthalaten schreibt man hormonähnliche Wirkungen zu, Caprolactame, Glykolderivate und Fluortenside werden als umweltbelastend eingestuft und Tributoxyethylphosphat als möglicherweise nervenschädigend.

Man ist deshalb bestrebt und hat das als Aufgabe der Erfindung angesehen, neue Substanzen zu finden, die sich gleichermaßen gut als Plastifikatoren in acrylatreichen Dispersionen eignen wie die oben genannten Substanzen, die aber toxikologisch und ökotoxikologisch unbedenklich sind. Gleichzeitig sollen die Plastifikatoren die Funktionen von Netz- und Verlaufsmittel, beispielsweise von Fluortensiden, übernehmen und diese ersetzen.

Überraschend wurde gefunden, dass diese Aufgabe gelöst wird durch Verwendung von Estern, erhalten durch Umsetzung von Polycarbonsäuren mit Monoalkoholen sowie von Monocarbonsäuren mit Polyolen, in Zubereitungen zum Pflegen harter Oberflächen, insbesondere von Bodenbelägen. Derartige Ester zeigen sowohl plastifizierende wie auch verlaufsfördernde Wirkung. Sie gewährleisten beim Auftragen und beim Abtrocknen der Zubereitungen auf den Oberflächen eine blasenfreie Filmbildung. Damit können permanente wie temporäre Plastifikatoren und auch Fluortenside durch Ester von Polyolen ersetzt werden. Es können somit durch die Verwendung dieser Ester Bodenpflegemittel hergestellt werden, die keine Phthalate, keine Fluortenside, keine Glykolderivate und keine Phosphorverbindungen enthalten.

Gegenstand der Erfindung sind Zubereitungen zum Pflegen harter Oberflächen, enthaltend Ester, erhalten durch Umsetzung von Polycarbonsäuren mit Monoalkoholen sowie von Monocarbonsäuren mit Polyolen gemäß der Formel I und/oder der Formel II und/oder der Formel III 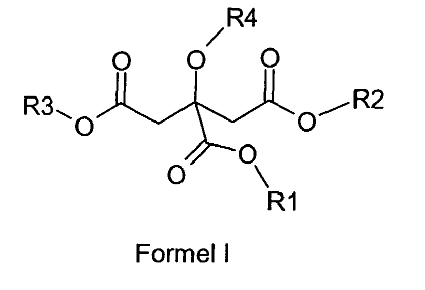 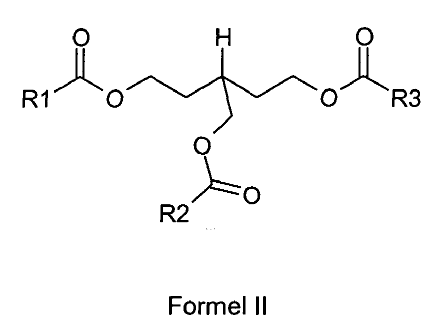 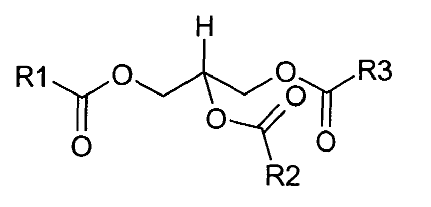 wobei die Reste R¹, R² und R³ unabhängig voneinander für Wasserstoff, eine lineare oder verzweigte Alkylgruppe mit 1 bis 30 Kohlenstoffatomen oder für eine lineare oder verzweigte Alkenylgruppe mit 2 bis 30 Kohlenstoffatomen stehen und R⁴ für Wasserstoff oder für eine Acylgruppe -C(O) R⁵ steht, wobei R⁵ eine lineare oder verzweigte Alkylgruppe mit 1 bis 30 Kohlenstoffatomen oder für eine lineare oder verzweigte Alkenylgruppe mit 2 bis 30 Kohlenstoffatomen steht, mit der Maßgabe dass mindestens einer der Reste R¹, R², R³ oder R⁴ für eine Kohlenwasserstoffgruppe steht.

In einer bevorzugten Ausführungsform enthalten die erfindungsgemäßen Zubereitungen zum Pflegen harter Oberflächen einen Ester der Zitronensäure gemäß der Formel I, bevorzugt Ester der Zitronensäure deren Alkylgruppen R¹, R² und R³ für lineare oder verzweigte Alkylgruppen mit 1 bis 6 Kohlenstoffatomen stehen. Besonders bevorzugte Zubereitungen enthalten Tributylzitronensäureester und Triethylzitronensäureester.

Die erfindungsgemäß eingesetzten Ester der Zitronensäure werden hergestellt durch Veresterung von Zitronensäure mit Alkohol, beispielsweise Methanol, Ethanol, Propanol, Isopropanol, Butanol, i-Butanol, t-Butanol, Pentanol, Hexanol, Heptanol, Octanol (Caprylalkohol), Octenol, Octadienol, Nonanol, Decanol, (Caprinalkohol), Decenol, Decadienol, Dodecanol (Laurylalkohol), Dodecadienol, Ricinolalkohol, Myristylalkohol, Cetylalkohol, Stearylalkohol, Cetearylalkohol, Oleylalkohol, Linoleylalkohol, Linolenylalkohol, Arachidylalkohol, Behenylalkohol, Talgfettalkohol, Palmitylalkohol, Kokosfettalkohol, Guerbetalkohol, Behenylalkohol.

In weiteren bevorzugten Ausführungsformen enthalten die erfindungsgemäßen Zubereitungen zum Pflegen harter Oberflächen Ester von Polyolen wie Trimethylolpropan und/oder Glycerin und Monocarbonsäuren gemäß der Formeln II und III. Dabei werden bevorzugt Monocarbonsäuren mit Kettenlängen von 2 bis 12 Kohlenstoffatomen, besonders bevorzugt 2 bis 8 Kohlenstoffatomen, ganz besonders bevorzugt 2 bis 6, außergewöhnlich bevorzugt 2 bis 4 eingesetzt.

Die erfindungsgemäßen Zubereitungen zum Pflegen harter Oberflächen, insbesondere von Bodenbelägen, enthalten Ester von Polycarbonsäuren mit Monoalkoholen oder von Monocarbonsäuren mit Polyolen gemäß der Formel I und/oder der Formel II und/oder der Formel III in den Gewichtsmengen von 1 bis 15 Gew.-%, bevorzugt 2 bis 10 Gew.-%, besonders bevorzugt 2 bis 5 Gew.-%, bezogen auf das Gesamtgewicht der fertigen Zubereitungen.

In einer weiteren bevorzugten Ausführungsform enthalten die erfindungsgemäßen Zubereitungen zum Pflegen harter Oberflächen
a) ein oder mehrere Ester von Polycarbonsäuren mit Monoalkoholen oder von Monocarbonsäuren mit Polyolen gemäß der Formel I und/oder der Formel II und/oder der Formel III und
b) einen oder mehrere polymere (Meth)acrylsäure(ester) und oder Styrol-(Meth)acrylsäure(ester)-Copolymere enthaltend eine oder mehrere Struktureinheiten I 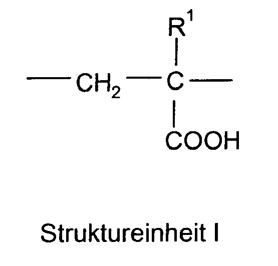 wobei R¹ für Wasserstoff oder Methyl steht,
   und/oder eine oder mehrere Struktureinheiten II 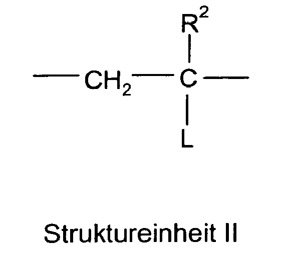 wobei
   - R²: für Wasserstoff oder Methyl steht,
   - L: -COOR³, -CONR⁷R⁸ oder -COO⁻X⁺ bedeutet,
   - R³: für eine geradkettigte oder verzweigte Alkylgruppe mit 1 bis 36

Kohlenstoffatomen oder eine geradkettigte oder verzweigte Alkenylgruppe mit 2 bis 36 Kohlenstoffatomen steht, die gegebenenfalls auch alkoxyliert sein kann und vorzugsweise Ethylenoxy-(EO), Propylenoxy-(PO), Butylenoxy- (BO) oder EO/PO-Gruppen enthalten kann, oder
eine Gruppe (AO)ₓ-H ist, wobei (AO) für eine Ethoxy-, Propoxy- oder Butoxygruppe steht und x eine Zahl von 1 bis 50 ist, oder
für eine Glycidylgruppe, eine C₂-C₁₀-Hydroxyalkylgruppe oder für eine Glyceringruppe steht, oder
für eine cyclische aromatische oder nichtaromatische Gruppe, vorzugsweise eine Cycloalkylgruppe, mit 5 bis 8, vorzugsweise 6, Ringatomen steht, oder
für eine cyclische aromatische oder nichtaromatische Gruppe mit 5 bis 8, vorzugsweise 6, Ringatomen steht, wobei der Ring aus Kohlenstoffatomen und Heteroatomen, vorzugsweise O und/oder N, gebildet ist, und sowohl die Kohlenstoffatome, als auch die Stickstoffatome mit linearen oder verzweigten Alkyl-oder Alkoxygruppen mit 1 bis 36 Kohlenstoffatomen oder mit linearen oder verzweigten Alkenyl- oder Alkenyloxygruppen mit 2 bis 36 Kohlenstoffatomen, oder mit Acetylgruppen -COR⁴, worin R⁴ eine Alkylgruppe mit 1 bis 22 Kohlenstoffatomen ist, substituiert sein können, oder
für -(CR⁵R⁶)_{y}-Cycloalkyl oder für -(CR⁵R⁶)_{y}-Aryl steht, wobei R⁵ und R⁶ jeweils unabhängig voneinander für H oder eine lineare oder verzweigte Alkylgruppe mit 1 bis 4 Kohlenstoffatomen stehen und y eine Zahl von 1 bis 10 ist, oder
für eine Perfluoralkylgruppe mit 8 bis 18 Kohlenstoffatomen steht,

R⁷ und R⁸ jeweils unabhängig voneinander
für Wasserstoff stehen, oder
für eine geradkettigte oder verzweigte Alkylgruppe mit 1 bis 36 Kohlenstoffatomen oder eine geradkettigte oder verzweigte Alkenylgruppe mit 2 bis 36 Kohlenstoffatomen stehen, die gegebenenfalls auch alkoxyliert sein können und vorzugsweise Ethylenoxy- (EO), Propylenoxy- (PO), Butylenoxy- (BO) oder EO/PO-Gruppen enthalten können, oder
für eine (C₂-C₁₀)-Hydroxyalkylgruppe stehen, oder
für -CH₂-CH₂-N(CH₃)₂ oder für einen Polyaminrest stehen, oder
für eine cyclische aromatische oder nichtaromatische Gruppe, vorzugsweise eine Cycloalkylgruppe, mit 5 bis 8, vorzugsweise 6, Ringatomen stehen, oder
für eine cyclische aromatische oder nichtaromatische Gruppe mit 5 bis 8, vorzugsweise 6, Ringatomen stehen, wobei die Ringe aus Kohlenstoffatomen und
Heteroatomen, vorzugsweise O und/oder N, gebildet sind, und sowohl die Kohlenstoffatome, als auch die Stickstoffatome mit linearen oder verzweigten Alkyl-oder Alkoxygruppen mit 1 bis 36 Kohlenstoffatomen oder mit linearen oder
verzweigten Alkenyl- oder Alkenyloxygruppen mit 2 bis 36 Kohlenstoffatomen, oder mit Acetylgruppen -COR⁹, worin R⁹ eine Alkylgruppe mit 1 bis 22 Kohlenstoffatomen ist, substituiert sein können, oder
R⁷ und R⁸ zusammen mit dem Stickstoffatom, an das sie gebunden sind, einen 5-, 6-oder 7-gliedrigen aromatischen oder nichtaromatischen Ring bilden, und die Ringe neben dem Stickstoffatom vorzugsweise lediglich CH₂-Gruppen enthalten,
X⁺ für Li⁺, Na⁺, K⁺, Mg⁺⁺/2, Ca⁺⁺/2, Al⁺⁺⁺/3, NH₄⁺, ein Monoalkylammonium-, Dialkylammonium-, Trialkylammonium- und/oder Tetraalkylammoniumion steht, wobei es sich bei den Alkylsubstituenten der Ammoniumionen unabhängig voneinander um (C₁-C₂₂)-Alkylreste oder (C₂-C₁₀)-Hydroxyalkylreste handeln kann, und
gegebenenfalls eine oder mehrere Struktureinheiten III 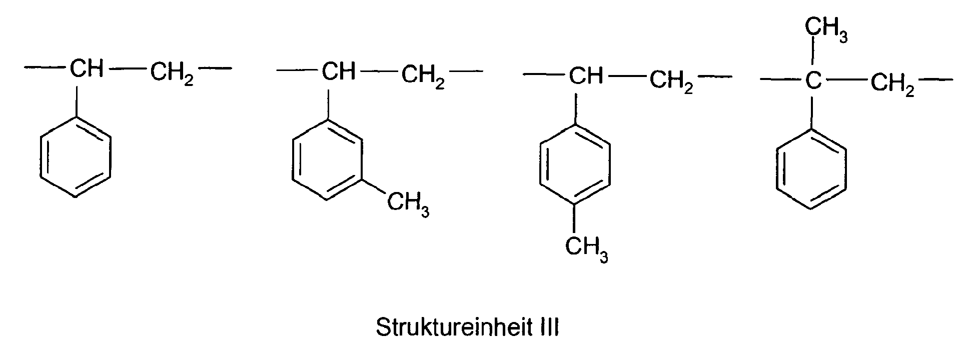 die sich von Styrol, 3-Methylstyrol, 4-Methylstyrol oder α-Methylstyrol ableiten.

Die Struktureinheiten I gehen durch Polymerisation von ungesättigten Carbonsäuren CH₂=CR¹-COOH hervor, worin R¹ Wasserstoff oder Methyl bedeutet, hervor, die Struktureinheiten II gehen z.B. durch Polymerisation von ungesättigten Verbindungen der Formel CH₂=CR²-L hervor, worin R² und L die oben angegebenen Bedeutungen besitzen.

Die in den erfindungsgemäßen Zubereitungen eingesetzten polymeren (Meth)acrylsäure(ester) und oder Styrol-(Meth)acrylsäure(ester)-Copolymere werden durch radikalische Emulsionspolymerisation bei Temperaturen im Bereich von 75 bis 80°C hergestellt und haben eine Filmbildetemperatur zwischen 0 und 80°C.

Die bevorzugt eingesetzten Polymere enthalten ein (Meth)acrylat-Copolymer aus 1 bis 30 Gewichtsteilen carbonsäurehaltige Monomere, 30 bis 70 Gewichtsteile Monomere, die Homopolymere mit Glasübergangstemperaturen unter 20°C bilden, vorzugsweise C₁-C₆-Alkylester der Acrylsäure und/oder der C₄-C₈-Alkylester der Methacrylsäure und 30 bis 70 Gewichtsteilen Monomere, die Homopolymere mit Glastemperaturen über Raumtemperatur bilden, vorzugsweise C₁-C₃-Alkylester der (Meth)acrylsäure oder Styrol, bezogen auf das jeweilige Copolymer.

Ein besonders bevorzugtes Comonomer, dessen Homopolymer eine Glastemperatur über Raumtemperatur aufweist, ist Styrol.

In besonders bevorzugten Ausführungsformen enthalten die erfindungsgemäßen Zubereitungen die Acrylat-Copolymere ®Licomer M55, ®Licomer M63, ®Licomer M72 (Clariant GmbH).

In den bevorzugten Ausführungsformen enthalten die erfindungsgemäßen Zubereitungen polymere (Meth)acrylsäure(ester) und oder Styrol-(Meth)acrylsäure(ester)-Copolymere mit einer Filmbildetemperatur zwischen 0 und 80 °C in den Gewichtsmengen von 5 bis 45 %, bevorzugt 5 bis 30 %, besonders bevorzugt 8 bis 20 %, von polymeren (Meth)acrylsäure(ester) und oder Styrol-(Meth)acrylsäure(ester)-Copolymeren, berechnet als reines Polymer bzw. Copolymer, bezogen auf die fertige Zubereitung.

In einer weiteren bevorzugten Ausführungsform enthalten die erfindungsgemäßen Zubereitungen zum Pflegen harter Oberflächen Polyethylenwachsdispersionen.

Bevorzugt eingesetzt werden ®Licomer W 11 und ®Licomer W19 (Clariant GmbH). ®Licomer W 11 und ®Licomer W 19 sind sekundäre Polyethylenwachsdispersionen, die durch Emulgieren von oxidierten Polyethylenwachsen bei 120 bis 150°C unter einem Druck von 2 bis 6 bar hergestellt werden.

In den bevorzugten Ausführungsformen enthalten die erfindungsgemäßen Zubereitungen Polyethylenwachsdispersionen in den Gewichtsmengen von 5 bis 45 %, bevorzugt 5 bis 30 %, besonders bevorzugt 8 bis 20 %, von Polyethylenwachs, berechnet als reines Polymer, bezogen auf die fertige Zubereitung.

Die erfindungsgemäßen Zubereitungen enthalten zusätzlich üblicherweise noch Emulgatoren, Tenside, Konservierungsmittel und Duft- und Farbstoffe.

Als nichtionogene Emulgatoren stehen vorzugsweise zur Verfügung Anlagerungsprodukte von 0 bis 30 Mol Ethylenoxid und/oder 0 bis 5 Mol Propylenoxid an lineare Fettalkohole mit 6 bis 30 C-Atomen, bevorzugt 10 bis 22 C-Atomen, und ganz besonders bevorzugt 14 bis 22 C-Atomen, gegebenenfalls hydroxyliert. Einsetzbar sind beispielsweise Octanol (Caprylalkohol), Octenol, Octadienol, Decanol (Caprinalkohol), Decenol, Decadienol, Dodecanol (Laurylalkohol), Dodecadienol, Ricinolalkohol, Myristylalkohol, Cetylalkohol, Stearylalkohol, Cetearylalkohol, Oleylalkohol, Linoleylalkohol, Linolenylalkohol, Arachidylalkohol, Behenylalkohol. Einsetzbar sind auch Fettalkoholschnitte, die durch Reduktion natürlich vorkommender Triglyceride, wie Rindertalg, Palmöl, Erdnussöl, Rüböl, Baumwollsaatöl, Sojaöl, Sonnenblumenöl und Leinöl erhalten werden oder die aus Umesterungsprodukten mit entsprechenden Alkoholen aus Fettsäureestern erzeugt werden und somit ein Gemisch von unterschiedlichen Fettalkoholen darstellen. Solche Substanzen sind beispielsweise unter der Bezeichnung Stenol^{®}, z.B. Stenol^{®} 1618, oder Lanette^{®}, z.B. Lanette^{®} O und Lanette^{®}22, oder Lorol^{®}, z.B. Lorol^{®}C18, im Handel erhältlich.

Eine weitere Klasse von erfindungsgemäß bevorzugten Emulgatoren sind Anlagerungsprodukte von 0 bis 30 Mol Ethylenoxid und/oder 0 bis 5 Mol Propylenoxid an lineare und/oder verzweigte, gesättigte und/oder ungesättigte Fettsäuren mit 6 bis 30 C-Atomen, bevorzugt 10 bis 22 Kohlenstoffatomen. Zu nennen sind Isostearinsäure, wie die Handelsprodukte Emersol^{®}871 und Emersol^{®}875, Isopalmitinsäuren wie Edenor^{®}IP95, sowie alle weiteren unter der Handelsbezeichnung Edenor^{®} (Cognis) käuflichen Fettsäuren. Weitere typische Beispiele für solche Fettsäuren sind Capronsäure, Caprylsäure, 2-Ethylhexansäure, Caprinsäure, Laurinsäure, Isotridecansäure, Myristinsäure, Palmitinsäure, Palmitoleinsäure, Stearinsäure, Isostearinsäure, Ölsäure, Elaidinsäure, Petroselinsäure, Linolsäure, Linolensäure, Elaeosterinsäure, Arachinsäure, Gadoleinsäure, Behensäure, Erucasäure und Dimere von ungesättigten Fettsäuren, sowie deren technische Mischungen. Besonders bevorzugt sind Fettsäureschnitte aus Kokosöl oder Palmöl, insbesondere bevorzugt ist Stearinsäure.

Eine weitere Klasse von bevorzugten Emulgatoren sind Ester von gewünschtenfalls alkylierten Zuckern mit C₆-C₃₀-Fettsäuren. Als Zucker können beliebige Mono- oder Oligosaccharide eingesetzt werden. Üblicherweise werden Monosaccharide mit 5 oder 6 Kohlenstoffatomen eingesetzt, beispielsweise Ribose, Xylose, Lyxose, Altose, Glucose, Fructose, Galactose, Arabinose, Altrose, Mannose, Gulose, Idose, Talose, sowie die Desoxyzucker Rhamnose und Fucose. Auch Zucker mit 4 Kohlenstoffatomen können eingesetzt werden, z.B. Erythrose und Threose. Erfindungsgemäß bevorzugte Oligosaccharide sind aus zwei bis 10 Monosaccharideinheiten zusammengesetzt, z.B. Sucrose (Saccharose), Lactose oder Trehalose. Bevorzugte Zuckerbausteine sind die Monosaccharide Glucose, Fructose, Galactose, Arabinose und das Disaccharid Sucrose. Glucose und Sucrose sind besonders bevorzugt. Die Zucker können partiell mit Methyl, Ethyl-, Propyl-, Isopropyl- oder Butylgruppen verethert sein, z.B. Methylglucosid, Ethylglucosid oder Butylglucosid. Zur Veresterung können alle C₆-C₃₀-Fettsäuren und deren Mischungen verwendet werden, die vorstehend genannt wurden. Geeignet sind prinzipiell einfach und mehrfach veresterte Zucker. Bevorzugt sind die Mono-, Sesqui- und Diester, beispielsweise Sucrosemonostearat, Sucrosedistearat, Sucrosemonococoat, Sucrosedicocoat, Methylglucosidmonostearat, Methylglucosidsesquistearat, Methylglucosidisostearat, Ethylglucosidmonolaurat, Ethylglucosiddilaurat, Ethylglucosidmonococoat, Ethylglucosiddicocoat und Butylglucosidmonococoat.

Eine weitere Klasse bevorzugter Emulgatoren sind C₈-C₂₂-Alkylmono- und -oligoglycoside, entsprechend der allgemeinen Formel RO-(Z)ₓ, wobei R für eine C₈-C₂₂-Alkylgruppe, Z für Zucker und x für die Anzahl der Zuckereinheiten stehen. Die erfindungsgemäß verwendbaren Alkylmono- und -oligoglycoside können lediglich einen bestimmten Alkylrest R enthalten. Besonders bevorzugt sind solche Alkylmono- und -oligoglycoside, bei denen R im wesentlichen aus C₈- und C₁₀₋Alkylgruppen, im wesentlichen aus C₁₂- und C₁₄-Alkylgruppen, im wesentlichen aus C₈- bis C₁₆-Alkylgruppen oder im wesentlichen aus C₁₂- bis C₁₆-Alkylgruppen besteht. Als Zuckerbaustein Z können beliebige Mono- oder Oligosaccharide, wie sie vorstehend genannt wurden, eingesetzt werden. Bevorzugte Zuckerbausteine sind Glucose, Fructose, Galactose, Arabinose und Sucrose, wobei Glucose besonders bevorzugt ist. Die erfindungsgemäß verwendbaren Alkylmono- und -oligoglycoside enthalten im Schnitt 1,1 - 5, bevorzugt 1,1- 2,0 und besonders bevorzugt 1,1 - 1,8 Zuckereinheiten.
Auch die alkoxylierten Homologen der genannten Alkylmono- und ―oligoglycoside können erfindungsgemäß bevorzugt eingesetzt werden. Diese Homologen können durchschnittlich bis zu 10 Ethylenoxid- und/oder Propylenoxideinheiten pro Alkylglycosideinheit enthalten. Geeignete Alkylglycoside sind hierbei beispielsweise Cocoylglucosid, Decylglucosid, Laurylglucosid, Cetearylglucosid und Arachidylglucosid.
Eine weitere Klasse bevorzugter Emulgatoren sind die Partialester von Propylenglykol, Glycerin und Sorbitan mit C₈-C₂₂-Fettsäuren. Zur Veresterung können alle C₈-C₂₂-Fettsäuren und deren Mischungen verwendet werden, die vorstehend bereits genannt wurden. Besonders geeignete Beispiele sind Propylenglycolmonostearat, Glycerinmonolaurat, Glycerinmonostearat, Glycerindistearat, Glycerinmonooleat, Sorbitanmonolaurat, Sorbitandilaurat, Sorbitanmonostearat, Sorbitansesquistearat, Sorbitandistearat, Sorbitanmonoisostearat, Sorbitanmonooleat, Sorbitandioleat oder die Handelsprodukte Monomuls^{®}90-0, Monomuls^{®}90-L 12 und Cutina^{®}MD. Diese Emulgatoren können durchschnittlich bis zu 10 Ethylenoxid- und/oder Propylenoxideinheiten pro Molekül enthalten.

Eine weitere bevorzugte Klasse an Emulgatoren sind Polyglycerine der Formel HO-CH₂-CHOH-CH₂[-O-CH₂-CHOH-CH₂]ₙ-O-CH₂-CHOH-CH₂OH mit n = 0-8 und deren Ester mit linearen und verzweigten C₈-C₂₂-Fettsäuren, die in der Alkylkette funktionelle Gruppen tragen können, bevorzugt Polyglyceryl-2-dipolyhydroxystearat (Handelsprodukt Dehymuls^{®} PGPH) und Polyglyceryl-3-diisostearat (Handelsprodukt Lameform^{®} TGI).

Bevorzugte nichtionische Tenside sind Fettalkoholoxethylate mit ca. 1 bis ca. 25 mol Ethylenoxid. Die Alkylkette der aliphatischen Alkohole kann linear oder verzweigt, primär oder sekundär sein, und enthält im Allgemeinen von 8 bis 22 Kohlenstoffatome. Besonders bevorzugt sind die Kondensationsprodukte von Alkoholen, die eine Alkylkette von 10 bis 20 Kohlenstoffen enthalten, mit 2 bis 18 mol Ethylenoxid pro mol Alkohol. Die Alkylkette kann gesättigt oder auch ungesättigt sein. Ebenso können die Alkoholethoxylate eine enge Homologenverteilung des Ethylenoxides ("Narrow Range Ethoxylates") oder eine breite Homologenverteilung des Ethylenoxides ("Broad Range Ethoxylates") aufweisen. Beispiele von kommerziell erhältlichen nichtionischen Tensiden die Genapol™-Marken der Clariant GmbH.

Als Konservierungsmittel eignen sich beispielsweise Phenoxyethanol, Parabene, Isothiazolinone oder Sorbinsäure.

Die Herstellung der erfindungsgemäßen Zubereitungen zum Pflegen harter Oberflächen, insbesondere der Bodenpflegemittel kann durch einfaches Mischen der Inhaltsstoffe erfolgen, die in Substanz oder als Lösung in einen automatischen Mischer gegeben werden können.

Die erfindungsgemäßen Zubereitungen können als so genannte Normalprodukte, als Konzentrate oder als Pasten vorliegen, wobei dem Fachmann bekannt ist, dass die Übergänge zwischen diesen Produkten fließend sind.

Normalprodukte sind in der Regel flüssig und stellen Lösungen oder Dispersionen ihrer Inhaltsstoffe dar. Die so genannten Konzentrate sind Lösungen oder Emulsionen der Inhaltsstoffe und weisen eine flüssige bis dickflüssige Konsistenz auf.

Die Anwendung kann manuell oder in üblichen Reinigungsautomaten erfolgen, beispielsweise durch Aufbringen der Pflegelösung und anschließendes Trocknen, wodurch ein dünner Pflegefilm ausgebildet wird.

Die erfindungsgemäßen Zubereitungen sind geeignet zum Pflegen von harten Oberflächen, insbesondere von Bodenbelägen aus Fliesen, Feinsteinzeugfliesen, Natursteinen, aber auch von Böden mit elastischen Belägen wie Linoleum und PVC.

Nachfolgende Beispiele sollen die Erfindung näher erläutern, ohne sie darauf einzuschränken. Alle Prozentangaben verstehen sich, sofern nicht anders angegeben, als Gewichtsprozent.

### Beispiele

### Beispiel 1 und Beispiel 2

Bodenpflegemittel mit Phthalat, Glykol und Phosphat (TBEP) (Beispiel 1) und Bodenpflegemittel mit Tributylcitrat, ohne Phthalat, Glykol und Phosphat (TBEP) (Beispiel 2)

| Inhaltsstoffe | Beispiel 1 | Beispiel 2 |
|---|---|---|
| Ethyldiglykol | 2,64 % | 0 % |
| Tributoxyethylphosphat | 0,88 % | 0 % |
| Dibutylphthalat | 0,88 % | 0 % |
| Tributylcitrat | 0 % | 3,5 % |
| ^{®}Licomer M 55 | 37,4 % | 37,4 % |
| ^{®}Alresat 640 C-Lsg. (20 %) | 4,8 % | 4,8 % |
| ^{®}Licomer W 19 | 6,7 % | 6,7 % |
| ^{®}Genapol X-060 | 0,8 % | 0,8 % |
| ^{®}Licowet F 3 | 1,0 % | 1,0 % |
| entionisiertes Wasser | ad 100 % | ad 100 % |
| Glanz (PVC, zweiter Auftrag) | 78 % | 83 % |

Der Glanz wurde nach DIN 67530 bzw. ISO 2813 (Bestimmung des Reflektormeterwertes von Beschichtungen unter einem Winkel von 60°).
Bei Begehversuchen wurden auch nach mehreren Wochen keine Unterschiede zwischen den beiden Formulierungen (Beispiel 1 und Beispiel 2) gefunden.

### Herstellung der Beispiele 1 und 2

Mischung von Wasser und Plastifikatoren (Ethylendiglykol, Tributoxyethylphosphat bzw. Tributylcitrat) bei Raumtemperatur unter intensivem Rühren über eine Zeitdauer (t) von 5 bis 10 Minuten. Nacheinander Zugabe der einzelnen Inhaltsstoffe in der angegebenen Reihenfolge unter Rühren. Anschließend intensives Nachrühren
(t = 30 Minuten).
Beispiele 3, 4 und 5: Bodenpflegemittel mit Tributylcitrat, ohne Fluortensid

### Beispiel 3

| | |
|---|---|
| Wasser, deionisiert | ad 100 % |
| Tributylcitrat | 4,4 |
| Diethylaminethanol | 0,4 |
| ^{®}Licomer M 55 | 37,4 |
| ^{®}Licomer W 19 | 6,7 |
| ^{®}Alresat 640 C-Lsg (20 %) | 4,8 |
| ^{®}Genapol X-080 | 0,8 % |
| ^{®}Saniprot 94-08 | 0,1 % |

### Beispiel 4

| | |
|---|---|
| Wasser, deionisiert | ad 100 % |
| Diethylaminethanol | 0,4 |
| Tributylcitrat | 5,2 |
| ^{®}Licomer M 63 | 37,4 |
| ^{®}Licomer W 19 | 7,3 |
| ^{®}Alresat 640 C-Lsg (20 %) | 5,0 |
| ^{®}Genapol X-080 | 0,9 % |
| ^{®}Saniprot 94-08 | 0,1 % |

### Beispiel 5

| | |
|---|---|
| Wasser, deionisiert | ad 100 % |
| Diethylaminethanol | 0,4 |
| Tributylcitrat | 4,1 |
| ^{®}Licomer M 72 | 36,8 |
| ^{®}Licomer W 19 | 7,9 |
| ^{®}Daotan VTW 1265 | 5,5 % |
| ^{®}Alresat 640 C-Lsg (20 %) | 5,6 % |
| ®Genapol X-080 | 0,9 % |
| ®Saniprot 94-08 | 0,1 % |

### Herstellweise der Beispiel 3, 4 und 5

Mischung von Wasser und Tributylcitrat unter intensivem Rühren über eine Zeitdauer (t) von 5 bis 10 Minuten. Nacheinander Zugabe er einzelnen Inhaltsstoffe in der angegebenen Reihenfolge unter Rühren. Danach intensives Nachrühren (t = 30 Minuten).

### Chemische Bezeichnung der eingesetzten Handelsprodukte

| | | |
|---|---|---|
| ^{®}Licomer M 55 | (Clariant GmbH) | Acrylat-Copolymer Dispersion |
| ^{®}Licomer M 63 | (Clariant GmbH) | Acrylat-Copolymer Dispersion |
| ^{®}Licomer M 72 | (Clariant GmbH) | Acrylat-Copolymer Dispersion |
| ^{®}Licomer W 19^{®} | (Clariant GmbH) | Polyethylenwachs Dispersion |
| ^{®}Alresat 640 C-Lsg. (20 %) | | modifiziertes Kolophonium |
| ^{®}Genapol X-060 | (Clariant GmbH) | Isotridecylalkoxylat (6EO) |
| ^{®}Genapol X-080 | (Clariant GmbH) | Isotridecylalkoxylat (8EO) |
| ^{®}Licowet F 3 | (Clariant GmbH) | Fluortensid |
| ^{®}Daotan VTW 1265 | Surface Specialities Germany GmbH & Co KG | |
| | | Polyurethanharz |
| ^{®}Saniprot 94-08 | (Sanitized AG) | Konservierungsmittel |

## Patentansprüche

1. Zubereitungen zum Pflegen und Behandeln harter Oberflächen enthaltend Ester, erhalten durch Umsetzung von Polycarbonsäuren mit Monoalkoholen oder von Monocarbonsäuren mit Polyolen gemäß der Formel I und/oder der Formel 11 und/oder der Formel III 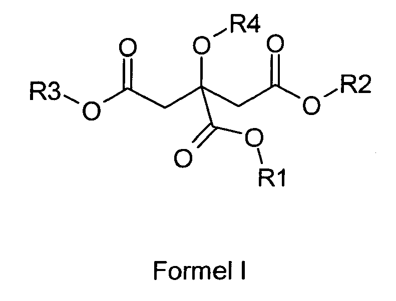 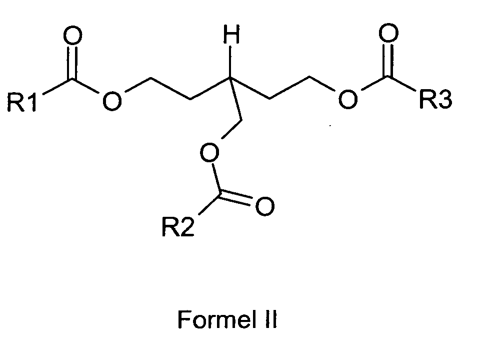 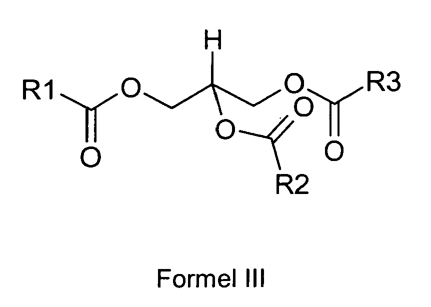 wobei die Reste R¹, R² und R³ unabhängig voneinander für Wasserstoff, eine lineare oder verzweigte Alkylgruppe mit 1 bis 30 Kohlenstoffatomen oder für eine lineare oder verzweigte Alkenylgruppe mit 2 bis 30 Kohlenstoffatomen stehen und R⁴ für Wasserstoff oder für eine Acylgruppe -C(O) R⁵ steht, wobei R⁵ eine lineare oder verzweigte Alkylgruppe mit 1 bis 30 Kohlenstoffatomen oder für eine lineare oder verzweigte Alkenylgruppe mit 2 bis 30 Kohlenstoffatomen steht, mit der Maßgabe dass mindestens einer der Reste R¹, R², R³ oder R⁴ für eine Kohlenwasserstoffgruppe steht.

2. Zubereitungen zum Pflegen und Behandeln harter Oberflächen nach Anspruch 1, **dadurch gekennzeichnet, dass** sie Ester der Zitronensäure gemäß der Formel I enthält, deren Alkylgruppen R¹, R² und R³ für lineare oder verzweigte Alkylgruppen mit 1 bis 8, vorzugsweise 2 bis 6, Kohlenstoffatomen stehen.

3. Zubereitungen zum Pflegen und Behandeln harter Oberflächen nach Anspruch 1 oder 2, **dadurch gekennzeichnet, dass** sie Tributylzitronensäureester oder Triethylzitronensäureester enthalten.

4. Zubereitungen zum Pflegen und Behandeln harter Oberflächen nach Anspruch 1, **dadurch gekennzeichnet, dass** sie Ester von Polyolen wie Trimethylolpropan und/oder Glycerin und Monocarbonsäuren gemäß den allgemeinen Formeln II und/oder III enthalten, bevorzugt mit Monocarbonsäuren mit 2 bis 12 Kohlenstoffatomen, besonders bevorzugt 2 bis 8 Kohlenstoffatomen, ganz besonders bevorzugt 2 bis 6 Kohlenstoffatomen, insbesondere 2 bis 4 Kohlenstoffatomen.

5. Zubereitungen zum Pflegen und Behandeln harter Oberflächen nach einem oder nach mehreren der Ansprüche 1 bis 4, **dadurch gekennzeichnet, dass** sie die Ester von Polycarbonsäuren mit Monoalkoholen oder von Monocarbonsäuren mit Polyolen in den Gewichtsmengen von 1 bis 15 Gew.-% enthalten, bevorzugt von 2 bis 10 Gew.-%, besonders bevorzugt von 2 bis 5 Gew.-%, jeweils bezogen auf das Gesamtgewicht der fertigen Zubereitungen.

6. Zubereitungen zum Pflegen und Behandeln harter Oberflächen nach einem oder nach mehreren der Ansprüche 1 bis 5, **dadurch gekennzeichnet, dass** sie
a) ein oder mehrere Ester von Polycarbonsäuren mit Monoalkoholen oder von Monocarbonsäuren mit Polyolen gemäß der Formel I und/oder der Formel II und/oder der Formel III und
b) einen oder mehrere polymere (Meth)acrylsäure(ester) und oder Styrol-(Meth)acrylsäure(ester)-Copolymere enthaltend eine oder mehrere Struktureinheiten I 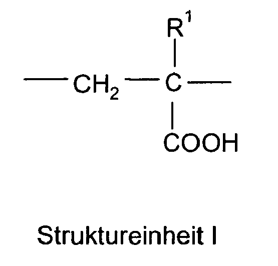 wobei R¹ für Wasserstoff oder Methyl steht,
und/oder eine oder mehrere Struktureinheiten II 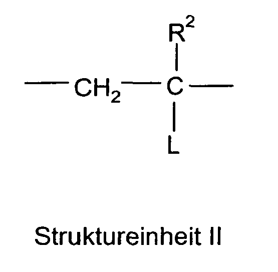 wobei
R² für Wasserstoff oder Methyl steht,
L -COOR³, -CONR⁷R⁸ oder -COO⁻X⁺ bedeutet,
R³ für eine geradkettigte oder verzweigte Alkylgruppe mit 1 bis 36 Kohlenstoffatomen oder eine geradkettigte oder verzweigte Alkenylgruppe mit 2 bis 36 Kohlenstoffatomen steht, die gegebenenfalls auch alkoxyliert sein kann und vorzugsweise Ethylenoxy-(EO), Propylenoxy-(PO), Butylenoxy-(BO) oder EO/PO-Gruppen enthalten kann, oder
eine Gruppe (AO)ₓ-H ist, wobei (AO) für eine Ethoxy-, Propoxy- oder Butoxygruppe steht und x eine Zahl von 1 bis 50 ist, oder
für eine Glycidylgruppe, eine C₂-C₁₀-Hydroxyalkylgruppe oder für eine Glyceringruppe steht, oder
für eine cyclische aromatische oder nichtaromatische Gruppe, vorzugsweise eine Cycloalkylgruppe, mit 5 bis 8, vorzugsweise 6, Ringatomen steht, oder
für eine cyclische aromatische oder nichtaromatische Gruppe mit 5 bis 8, vorzugsweise 6, Ringatomen steht, wobei der Ring aus Kohlenstoffatomen und
Heteroatomen, vorzugsweise O und/oder N, gebildet ist, und sowohl die Kohlenstoffatome, als auch die Stickstoffatome mit linearen oder verzweigten Alkyl-oder Alkoxygruppen mit 1 bis 36 Kohlenstoffatomen oder mit linearen oder verzweigten Alkenyl- oder Alkenyloxygruppen mit 2 bis 36 Kohlenstoffatomen, oder mit Acetylgruppen -COR⁴, worin R⁴ eine Alkylgruppe mit 1 bis 22 Kohlenstoffatomen ist, substituiert sein können, oder
für -(CR⁵R⁶)_{y}-Cycloalkyl oder für -(CR⁵R⁶)_{y}-Aryl steht, wobei R⁵ und R⁶ jeweils unabhängig voneinander für H oder eine lineare oder verzweigte Alkylgruppe mit 1 bis 4 Kohlenstoffatomen stehen und y eine Zahl von 1 bis 10 ist, oder
für eine Perfluoralkylgruppe mit 8 bis 18 Kohlenstoffatomen steht,
R⁷ und R⁸ jeweils unabhängig voneinander
für Wasserstoff stehen, oder
für eine geradkettigte oder verzweigte Alkylgruppe mit 1 bis 36 Kohlenstoffatomen oder eine geradkettigte oder verzweigte Alkenylgruppe mit 2 bis 36 Kohlenstoffatomen stehen, die gegebenenfalls auch alkoxyliert sein können und vorzugsweise Ethylenoxy- (EO), Propylenoxy- (PO), Butylenoxy- (BO) oder EO/PO-Gruppen enthalten können, oder
für eine (C₂-C₁₀)-Hydroxyalkylgruppe stehen, oder
für -CH₂-CH₂-N(CH₃)₂ oder für einen Polyaminrest stehen, oder
für eine cyclische aromatische oder nichtaromatische Gruppe, vorzugsweise eine Cycloalkylgruppe, mit 5 bis 8, vorzugsweise 6, Ringatomen stehen, oder
für eine cyclische aromatische oder nichtaromatische Gruppe mit 5 bis 8, vorzugsweise 6, Ringatomen stehen, wobei die Ringe aus Kohlenstoffatomen und Heteroatomen, vorzugsweise O und/oder N, gebildet sind, und sowohl die Kohlenstoffatome, als auch die Stickstoffatome mit linearen oder verzweigten Alkyl-oder Alkoxygruppen mit 1 bis 36 Kohlenstoffatomen oder mit linearen oder verzweigten Alkenyl- oder Alkenyloxygruppen mit 2 bis 36 Kohlenstoffatomen, oder mit Acetylgruppen -COR⁹, worin R⁹ eine Alkylgruppe mit 1 bis 22 Kohlenstoffatomen ist, substituiert sein können, oder
R⁷ und R⁸ zusammen mit dem Stickstoffatom, an das sie gebunden sind, einen 5-, 6-oder 7-gliedrigen aromatischen oder nichtaromatischen Ring bilden, und die Ringe neben dem Stickstoffatom vorzugsweise lediglich CH₂-Gruppen enthalten,
X⁺ für Li⁺, Na⁺, K⁺, Mg⁺⁺/2, Ca⁺⁺/2, Al⁺⁺⁺/3, NH₄⁺, ein Monoalkylammonium-, Dialkylammonium-, Trialkylammonium- und/oder Tetraalkylammoniumion steht, wobei es sich bei den Alkylsubstituenten der Ammoniumionen unabhängig voneinander um (C₁-C₂₂)-Alkylreste oder (C₂-C₁₀)-Hydroxyalkylreste handeln kann, und
gegebenenfalls eine oder mehrere Struktureinheiten III 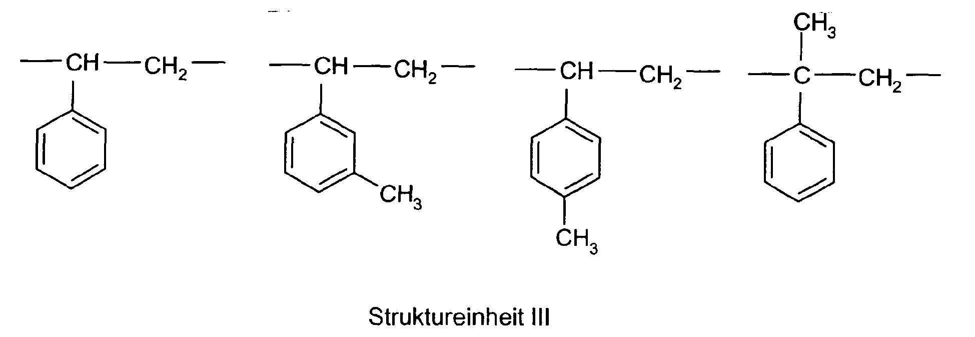 die sich von Styrol, 3-Methylstyrol, 4-Methylstyrol oder α-Methylstyrol ableiten.

7. Zubereitungen zum Pflegen und Behandeln harter Oberflächen nach Anspruch 6, **dadurch gekennzeichnet, dass** sie als Komponente b) ein (Meth)acrylat-Copolymer enthalten aus 1 bis 30 Gewichtsteilen carbonsäurehaltiger Monomerer, aus 30 bis 70 Gewichtsteilen Monomerer, die Homopolymere mit Glasübergangstemperaturen unter 20°C bilden, vorzugsweise C₁-C₆-Alkylester der Acrylsäure und/oder C₄-C₈-Alkylester der Methacrylsäure, und aus 30 bis 70 Gewichtsteilen Monomerer, die Homopolymere mit Glasübergangstemperaturen über Raumtemperatur bilden, vorzugsweise C₁-C₃-Alkylester der (Meth)acrylsäure oder Styrol.

8. Zubereitungen zum Pflegen und Behandeln harter Oberflächen nach Anspruch 6 oder 7, **dadurch gekennzeichnet, dass** sie als Komponente b) polymere (Meth)acrylsäure(ester) und oder Styrol-(Meth)acrylsäure(ester)-Copolymere mit einer Filmbildetemperatur zwischen 0 und 80 °C in Mengen von 5 bis 45 Gew.-% enthalten, bevorzugt von 5 bis 30 Gew.-%, besonders bevorzugt von 8 bis 20 Gew.-%, berechnet als reines Polymer bzw. Copolymer, bezogen auf das Gesamtgewicht der fertigen Zubereitung.

9. Zubereitungen zum Pflegen und Behandeln harter Oberflächen nach einem oder nach mehreren der Ansprüche 1 bis 8, **dadurch gekennzeichnet, dass** sie zusätzlich Polyethylenwachsdispersionen enthalten.

10. Zubereitungen zum Pflegen und Behandeln von harten Oberflächen nach Anspruch 9, **dadurch gekennzeichnet, dass** sie sekundäre Polyethylenwachsdispersionen enthalten, die durch Emulgieren von oxidierten Polyethylenwachsen bei Temperaturen von 120 bis 150°C unter einem Druck von 2 bis 6 bar hergestellt werden.

11. Zubereitungen zum Pflegen und Behandeln harter Oberflächen nach Anspruch 9 oder 10, **dadurch gekennzeichnet, dass** sie die Polyethylenwachsdispersionen in Mengen von 5 bis 45 Gew.-% enthalten, bevorzugt von 5 bis 30 Gew.-%, besonders bevorzugt 8 bis 20 Gew.-%, berechnet als reines Polymer, bezogen auf das Gesamtgewicht der fertigen Zubereitung.
